# EUROPÄISCHE PATENTANMELDUNG

(11) **EP 4 778 611 A1**
(43) Veröffentlichungstag der Anmeldung: **22.07.2026**
(21) Anmeldenummer: 25152474.0
(22) Anmeldetag: 17.01.2025
(51) Int. Cl.: B01D 29/03, B01D 29/44, B01D 29/64

(54) **FESTSTOFFABSCHEIDER AUS FLÜSSIGKEITEN**

(71) Anmelder: Eder GmbH, 3652 Leiben (AT)
(72) Erfinder: Eder, Elisabeth, 3652 Leiben (AT); Eder, Michael, 3652 Leiben (AT)
(74) Vertreter: Patentanwälte Barger, Piso & Partner

(57) **Zusammenfassung**

Feststoffabscheider (1) aus Flüssigkeiten, welcher in einem mit Flüssigkeitszu- (5) und - ablauf (6) versehenen Gehäuse (2) einen Rechenrost (3) in Form eines konkav nach unten gewölbten Teilzylindermantels mit einer Vielzahl von in Umfangsrichtung verlaufenden, äquidistanten Schlitzen (4) aufweist, in dessen horizontaler Zylinderachse (7) wenigstens ein an seinem Außenende einen über die Breite des Rechenrostes (3) erstreckten Schaber (9) tragenden Arm (8) rotierbar gelagert ist, wobei sich an dem in Drehrichtung des Arms (8) gesehenen Ende des Rechenrostes (3) eine Abwurfkante (10) und daran angrenzend eine Auffangrinne (11) für abgeschiedene Feststoffe befindet. Zur Gewährleistung eines wartungsfreien Dauerbetriebs mit einem sicheren Abwurf von abgeschiedenen Feststoffteilchen weist der wenigstens eine Schaber (9) in die Schlitze (4) des Rechenrostes (3) eingreifende Zähne (12) auf und ist ein der Breite des Schabers (9) entsprechender Abstreifer (17) für den Schaber (9) über ein Gestänge (18) auf einer oberhalb des Rechenrostes (3) und außerhalb des Bewegungsraums des Schabers (9) an der der Abwurfkante (10) zugekehrten Seite im Gehäuse (2) parallel zur Zylinderachse (7) vorgesehenen Schwenkachse (19) gelagert, wobei der Abstreifer (17) mit dem Schaber (9) in Kontakt gelangt, bevor dieser bei der Drehbewegung die Ablaufkante (10) erreicht.

## Beschreibung

Die Erfindung bezieht sich auf einen Feststoffabscheider aus Flüssigkeiten, welcher in einem mit Flüssigkeitszu- und - ablauf versehenen Gehäuse einen Rechenrost in Form eines konkav nach unten gewölbten Teilzylindermantels mit einer Vielzahl von in Umfangsrichtung verlaufenden, äquidistanten Schlitzen aufweist, in dessen horizontaler Zylinderachse wenigstens ein an seinem Außenende einen über die Breite des Rechenrostes erstreckten Schaber tragenden Arm rotierbar gelagert ist, wobei sich an dem in Drehrichtung des Arms gesehenen Ende des Rechenrostes eine Abwurfkante und daran angrenzend eine Auffangrinne für abgeschiedene Feststoffe befindet.

Ein derartiger Feststoffabscheider ist unter der Bezeichnung "Feinsiebrechen" durch die WO 2004/101105 A1 bekanntgeworden. Gemäß dieser hat der Rechenrost die Form eines Viertel-Hohlzylinders, an dessen oberem Ende sich die Abwurfkante befindet und dessen unteres Ende tangential in einen horizontalen Flüssigkeitszulauf mündet. Die horizontale Zylinderachse ist in einem Schwenkhebel gelagert, der es ermöglicht, dass der rotierende Schaber zwischen einer den Rechenrost berührenden Räumlage und einer von diesem abgehobenen Freilage bewegbar ist. Dadurch kann der Schaber größeren Feststoffteilchen ausweichen, sodass ein Blockieren seiner Rotation vermieden wird. Zur Gewährleistung eines sicheren Abwurfes von auf dem Rechenrost verbliebenen Feststoffteilchen sind gegen die Abwurfkante gerichtete Sprühdüsen vorgesehen.

In der Praxis hat sich gezeigt, dass die Ausweichmöglichkeit des Schabers die Ansammlung von Feststoffklumpen auf dem Rechenrost begünstigt, die von Zeit zu Zeit entfernt werden müssen. Außerdem ist durch die Sprühdüsen kein sicherer Abwurf von abgeschiedenen Feststoffteilchen gewährleistet.

Ziel der Erfindung ist daher die Bereitstellung eines Feststoffabscheiders, der die vorgenannten Nachteile nicht aufweist, also einen störungs- und wartungsfreien Dauerbetrieb ermöglicht.

Dieses Ziel wird mit einem Feststoffabscheider der eingangs genannten Art erfindungsgemäß dadurch erreicht, dass der wenigstens eine Schaber in die Schlitze des Rechenrostes eingreifende Zähne aufweist und dass ein der Breite des Schabers entsprechender Abstreifer für den Schaber über ein Gestänge auf einer oberhalb des Rechenrostes und außerhalb des Bewegungsraums des Schabers an der der Abwurfkante zugekehrten Seite im Gehäuse parallel zur Zylinderachse vorgesehenen Schwenkachse gelagert ist und mit dem Schaber in Kontakt gelangt, bevor dieser bei der Drehbewegung die Abwurfkante erreicht.

Dadurch, dass der wenigstens eine Schaber nicht bloß über den Rechenrost streicht, sondern mit seinen Zähnen in dessen Schlitze eingreift, ist ein sicherer Transport von abgeschiedenen Feststoffteilchen über die Abwurfkante zur Auffangrinne gewährleistet. Dies wird noch dadurch unterstützt, dass jeder Schaber im Zuge seiner Rotation vor Erreichen der Abwurfkante auf den schwenkbaren Abstreifer trifft, der zwangsläufig alle zurückbehaltenen Feststoffteilchen über die Abwurfkante schiebt. Ein Blockieren der Rotation des wenigstens einen Schabers durch abgeschiedene Feststoffteilchen ist somit ausgeschlossen, also ein Dauerbetrieb gesichert.

Durch geeignete Positionierung der Schwenkachse des Abstreifers zwischen der Zylinderachse des Rechenrostes und dessen Abwurfkante sowie durch Abstimmung der Abmessungsrelationen zwischen Gestänge, Abstreifer und Rechenrost kann der Ort des jeweils ersten Kontakts zwischen dem Abstreifer und dem wenigstens einen Schaber so gewählt werden, dass ein Blockieren der Drehbewegung des Schabers durch den Abstreifer ausgeschlossen ist. Dennoch ist es von Vorteil, wenn die Schwenkstellung des Abstreifers beim jeweils erstmaligen Kontakt mit dem wenigstens einen Schaber durch einen im Gehäuse vorgesehenen Anschlag definiert ist.

Obzwar der Abstreifer samt seinem Gestänge nach erfolgtem Abstreifen des Schabers durch sein Eigengewicht in seine am Anschlag anliegende Position zurückschwenken kann, ist es mitunter zweckmäßig, wenn ein den Abstreifer gegen den Anschlag drückendes elastisches Element vorgesehen ist.

Bei einer bevorzugten Ausführungsform der Erfindung befindet sich die Schwenkachse des Abstreifers in einem Abstand oberhalb der Zylinderachse des Rechenrostes, der dem 1,1- bis 1,3-fachen des Außenradius des Rechenrostes entspricht.

Es hat sich als günstig erwiesen, wenn die Schwenkachse des Abstreifers gegenüber einer Vertikalen durch die Zylinderachse in Richtung auf die Abwurfkante versetzt ist, wobei eine Verbindung zwischen Zylinderachse und Schwenkachse mit der Vertikalen einen Winkel (α) von 5 bis 45° einschließt.

Eine zuverlässige Funktion des erfindungsgemäßen Feststoffabscheiders ist gewährleistet, wenn der Abstreifer beim jeweils erstmaligen Kontakt mit dem wenigsten einen Schaber gegenüber einer Vertikalen durch die Zylinderachse um einen Winkel (β) von 5 bis 30° in Richtung zur Abwurfkante verschwenkt ist.

Von besonderem Vorteil ist es, wenn ein der Abwurfkante gegenüberliegendes Ende des Rechenrostes einen geringeren Höhenabstand zur Zylinderachse des Rechenrostes aufweist als die Abwurfkante. Dieses Ende befindet sich dann nämlich auf einem höheren Niveau als die Abwurfkante des teilzylinderförmigen Rechenrostes, die ja den Flüssigkeitsspiegel im Feststoffabscheider definiert. Bei der Drehung des wenigstens einen Schabers in Richtung zur Abwurfkante greifen somit dessen Zähne in den Rechenrost schon oberhalb des Flüssigkeitsspiegels (auch Verschmutzungshorizont genannt) ein, sodass beim Eintritt des Schabers in die verunreinigte Flüssigkeit die abgelagerten Feststoffe jedenfalls sicher über die Abwurfkante geschoben werden.

Um sicher zu gehen, dass die Siebwirkung der Zähne in den Schlitzen des Rechenrostes vollkommen ist, empfiehlt es sich, sie so lange auszufüllen, dass sie die Schlitze vollständig durchsetzen.

Damit sich die Zähne in den Schlitzen des Rechenrostes im Zusammenhang mit Feststoffteilchen nicht leicht verspießen, ist es empfehlenswert, ein seitliches Spiel der Zähne von 25 bis 50 % der Schlitzbreite vorzusehen. Die Gefahr des Verspießens mit zurückgehaltenen Feststoffteilchen kann noch weiter verringert werden, wenn die Zähne des wenigstens einen Schabers gegenüber einer Radialverbindung zwischen der Zylinderachse des Rechenrostes und dem Außenende des wenigstens einen den Schaber tragenden Arms um einen Winkel (γ) von 0 bis 10° in Drehrichtung angestellt sind. Dann heben nämlich die Zähne bei der Bewegung die Feststoffe aus den Schlitzen gleichsam an, schieben sie also nicht bloß vor sich her.

Um den Eingriff der Zähne des wenigstens einen Schabers in die Schlitze des Rechenrostes optimal justieren zu können, hat es sich als vorteilhaft erwiesen, wenn die Zähne des wenigstens einen Schabers auf einer in Radialrichtung verstellbaren Platte ausgebildet sind.

Obzwar der wenigstens eine, von wenigstens einem Arm getragene, rotierbare Schaber zweckentsprechend gelagert werden kann, empfiehlt es sich dennoch, ihn auf wenigstens einer der beiden Stirnseiten des Rechenrostes noch in einer Führung zu führen, um ihm optimale Stabilitätseigenschaften bei der Drehbewegung zu verleihen.

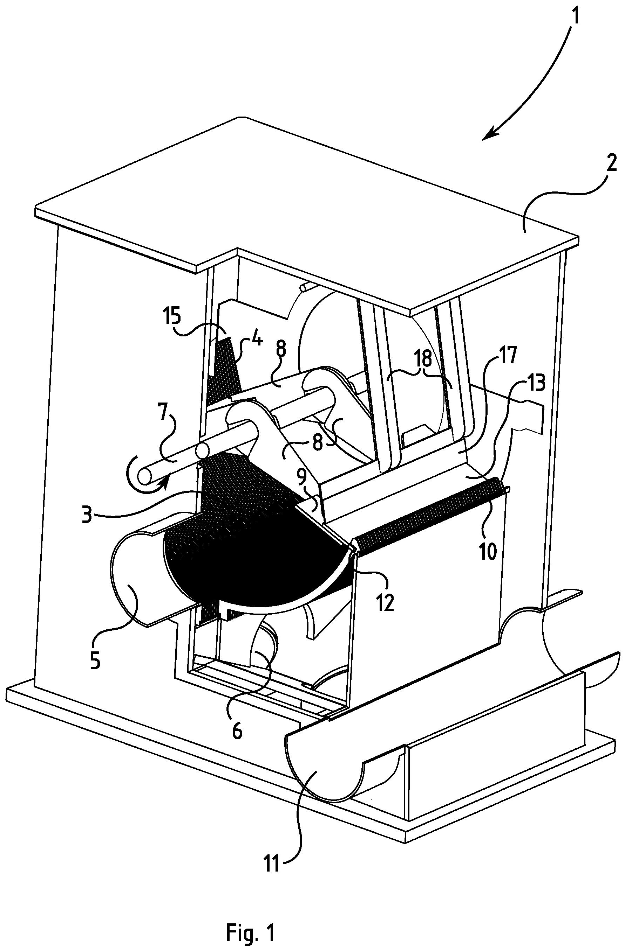

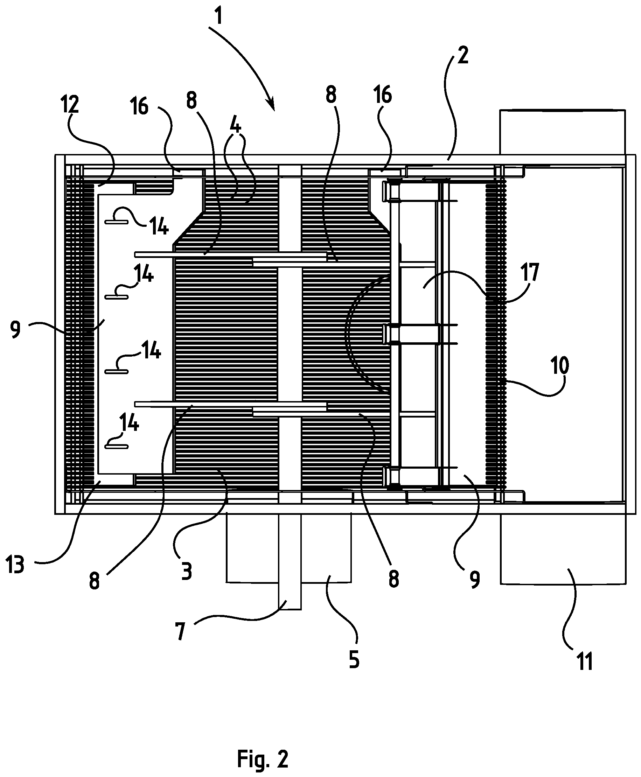

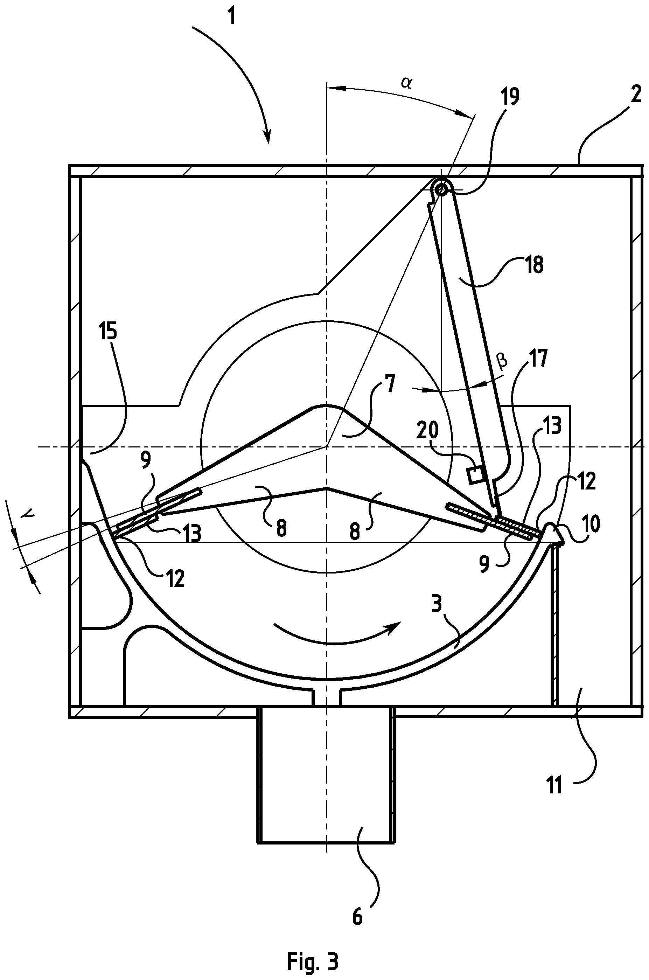

Die Erfindung wird im Folgenden anhand eines in der Zeichnung veranschaulichten, bevorzugten Ausführungsbeispiels näher erläutert. Es zeigen Fig. 1 eine schematische, teils aufgebrochene Schrägansicht eines Ausführungsbeispiels eines erfindungsgemäßen Feststoffabscheiders, Fig. 2 eine schematische, aufgebrochene Draufsicht auf den Feststoffabscheider gemäß Fig. 1 und Fig. 3 eine schematische Vorderansicht des Feststoffabscheiders gemäß Fig. 1.

Der Feststoffabscheider 1 aus Flüssigkeiten weist in einem Gehäuse 2 einen Rechenrost 3 in Form eines konkav nach unten gewölbten Teilzylindermantels auf, der mit einer Vielzahl von in Umfangsrichtung verlaufenden, äquidistanten Schlitzen 4 versehen ist. Das Gehäuse 2 weist einen Flüssigkeitszulauf 5 für feststoffbelastete Flüssigkeit und einen Flüssigkeitsablauf 6 für gereinigte Flüssigkeit auf. In der horizontalen Zylinderachse 7 des Rechenrostes 3 ist wenigstens ein Arm 8 rotierbar gelagert, der an seinem Außenende einen über die Breite des Rechenrostes 3 erstreckten Schaber 9 trägt. Im dargestellten Ausführungsbeispiel sind zwei Schaber 9 vorgesehen, die einen Winkelabstand von ca. 120° aufweisen und jeweils von zwei in Richtung der Zylinderachse 7 voneinander distanzierten, parallelen Armen 8 getragen werden. Die Anzahl der Schaber 9 und die Anzahl der sie jeweils tragenden Arme 8 kann je nach Anwendungsfall und Erfordernis gewählt werden.

In Drehrichtung des Arms/der Arme 8 mit dem Schaber/mit den Schabern 9 gesehen - im dargestellten Beispiel entgegen dem Uhrzeigersinn - endet der Rechenrost 3 an einer Abwurfkante 10, an die eine Auffangrinne 11 für abgeschiedene Feststoffe angrenzt. Die Abwurfkante 10 definiert somit den maximalen Flüssigkeitsstand im Gehäuse 2, den sogenannten "Verschmutzungshorizont".

Der wenigstens eine Schaber 9 weist in die Schlitze 4 des Rechenrostes 3 eingreifende Zähne 12 auf. Obzwar ein Eingriff an sich die erfindungsgemäße Funktion durchaus erfüllt, ist es günstiger, wenn die Zähne 12 den Rechenrost 3 vollständig durchsetzen (nicht dargestellt), weil dann gesichert ist, dass keine Feststoffteilchen in den Schlitzen 4 stecken bleiben. Damit ein Verspießen von Feststoffteilchen im Rechenrost 3 und ein Blockieren der Drehbewegung des wenigstens einen Schabers 9 möglichst hintangehalten wird, weisen die Zähne 12 des wenigstens einen Schabers 9 in den Schlitzen 4 des Rechenrostes 3 ein seitliches Spiel von 25 bis 50 % der Schlitzbreite auf.

Wie aus Fig. 3 hervorgeht, sind bei einer bevorzugten Ausführungsform der Erfindung die Zähne 4 des wenigstens einen Schabers 9 gegenüber einer Radialverbindung zwischen der Zylinderachse 7 des Rechenrostes 3 und dem Außenende des wenigstens einen den Schaber 9 tragenden Arms 8 um einen Winkel (γ) von 0 bis 10° in Drehrichtung angestellt sind. Dadurch werden auf dem Rechenrost 3 liegende Feststoffteilchen beim Verschieben in Richtung Abwurfkante 10 etwas angehoben, also leichter transportiert. Die Zähne 12 können auch in vorteilhafter Weise auf einer in Radialrichtung des wenigstens einen Arms 8 verstellbaren Platte 13 ausgebildet sein. Diese Verstellbarkeit kann beispielsweise mit Hilfe von Führungen in Langlöchern 14 erfolgen, wie in Fig. 3 angedeutet, und dient für eine optimale Anpassung des wenigstens einen Schabers 9 an den Rechenrost 3.

Aus Fig. 1 und 3 ist weiters ersichtlich, dass das der Abwurfkante 10 gegenüberliegende Ende 15 des teilzylindermantelförmigen Rechenrosts 3 einen geringeren Höhenabstand zur Zylinderachse 7 des Rechenrostes 3 aufweist als die Abwurfkante 10. Dies bedeutet, dass sich das Ende 15 oberhalb der Abwurfkante 10, d.h. oberhalb des Flüssigkeitsspiegels im Gehäuse 2 befindet, also aus der Flüssigkeit jedenfalls herausragt. Im Zuge der Drehung des wenigstens einen Schabers 9 entgegen dem Uhrzeigersinn greifen dessen Zähne 12 in die Schlitze 4 des Rechenrostes 3 somit bereits außerhalb des Verschmutzungshorizonts ein, sodass bei Eintritt des wenigstens einen Schabers 9 in die Flüssigkeit die darin enthaltenen Feststoffteilchen jedenfalls entfernt und letztlich ausgesiebt werden.

Aus Fig. 2 geht hervor, dass der wenigstens eine Schaber 9 an einer Stirnseite des Rechenrostes 3 in einer Führung 16 geführt ist. Eine solche Führung dient der Stabilisierung der Drehbewegung des Schabers 9, kann auf beiden Stirnseiten des Rechenrostes 3 vorgesehen und auf herkömmliche Weise ausgeführt sein.

Damit die vom wenigstens einen Schaber 9 erfassten Feststoffteilchen an der Abwurfkante 10 sicher abgeworfen werden und nicht etwa auf ihnen haften bleiben, weist der erfindungsgemäße Feststoffabscheider 1 einen Abstreifer 17 für den wenigstens einen Schaber 9 auf. Dieser entspricht der Breite des Schabers 9 und ist über ein Gestänge 18 auf einer Schwenkachse 19 gelagert, die sich oberhalb des Rechenrostes 3 parallel zu seiner Zylinderachse 7 und außerhalb des Bewegungsraums des Schabers 9 an der der Abwurfkante 10 zugekehrten Seite im Gehäuse 2 befindet (Fig. 3). Wie aus Fig. 1 und 3 ersichtlich, gelangt der Abstreifer 17 in Kontakt mit dem jeweiligen Schaber 9, bevor dieser bei der Drehbewegung die Abwurfkante 10 erreicht, und streift die auf dem Schaber 9 befindlichen Feststoffteilchen im Zuge der weiteren Drehbewegung zwingend in die Auffangrinne 11 ab.

Zwecks sicherer Festlegung des jeweiligen Erstkontaktes zwischen dem Schaber 9 und dem Abstreifer 17 ist im Gehäuse 2 ein Anschlag 20 für den Abstreifer 17 vorgesehen, wie in Fig. 3 schematisch dargestellt. Dieser kann in jeder einer Fachperson bekannten Art und Weise ausgeführt sein. Nach Überschreiten der Abwurfkante 10 im Zuge der Drehung endet der Kontakt zwischen dem Schaber 9 und dem Abstreifer 17, sodass letzterer infolge seines Eigengewichts in die durch den Anschlag 20 definierte Ausgangslage zurückschwenken kann.

Um dieses Zurückschwenken jedenfalls sicher zu gewährleisten, kann ein den Abstreifer 17 gegen den Anschlag 20 drückendes elastisches Element (nicht dargestellt) vorgesehen sein.

Wie aus Fig. 3 hervorgeht, befindet sich bei einer bevorzugten Ausführungsform der Erfindung die Schwenkachse 19 des Abstreifers 17 in einem Abstand oberhalb der Zylinderachse 7 des Rechenrostes 3 der dem 1,1- bis 1,3-fachen des Außenradius des Rechenrostes 3 entspricht. Die Schwenkachse 19 des Abstreifers 17 ist dabei gegenüber einer Vertikalen durch die Zylinderachse 7 in Richtung auf die Abwurfkante 10 versetzt, wobei eine Verbindung zwischen Zylinderachse 7 und Schwenkachse 19 mit der Vertikalen einen Winkel α von 5 bis 45° einschließt. Der wenigstens eine Schaber 9 ist beim jeweils erstmaligen Kontakt mit dem Abstreifer 17 gegenüber einer Vertikalen durch die Zylinderachse 7 bzw. durch die dazu parallele Schwenkachse 19 um einen Winkel β von 5 bis 30° in Richtung zur Abwurfkante 10 verschwenkt.

Der erfindungsgemäße Feststoffabscheider für Flüssigkeiten kann beispielsweise zur Reinigung von warmem, mit Feststoffen belastetem Abwasser (Schwarzwasser) zwecks Erzielung von Grauwasser eingesetzt werden, das zur Wärmerückgewinnung einem Wärmetauscher zugeführt wird. Die Abmessungen des Gehäuses 2 können 1,3 x 1,0 x 1,4 m betragen und der Rechenrost 3 kann eine Fläche von 0,8 m² mit Schlitzen von 6 mm Breite aufweisen. Bei einer Antriebsdrehzahl von etwa 5 U/min kann ein Wasserdurchsatz von ca. 50 m³/h bei Temperaturen bis zu 100 °C erzielt werden. Das abgekühlte, aus dem Wärmetauscher austretende Grauwasser kann dann zweckmäßigerweise in die Auffangrinne 11 geleitet werden, um so die zuvor abgeschiedenen Feststoffe ohne zusätzlichen Aufwand zu entsorgen.

## Patentansprüche

1. Feststoffabscheider (1) aus Flüssigkeiten, welcher in einem mit Flüssigkeitszu- (5) und - ablauf (6) versehenen Gehäuse (2) einen Rechenrost (3) in Form eines konkav nach unten gewölbten Teilzylindermantels mit einer Vielzahl von in Umfangsrichtung verlaufenden, äquidistanten Schlitzen (4) aufweist, in dessen horizontaler Zylinderachse (7) wenigstens ein an seinem Außenende einen über die Breite des Rechenrostes (3) erstreckten Schaber (9) tragenden Arm (8) rotierbar gelagert ist, wobei sich an dem in Drehrichtung des Arms (8) gesehenen Ende des Rechenrostes (3) eine Abwurfkante (10) und daran angrenzend eine Auffangrinne (11) für abgeschiedene Feststoffe befindet, **dadurch gekennzeichnet, dass** der wenigstens eine Schaber (9) in die Schlitze (4) des Rechenrostes (3) eingreifende Zähne (12) aufweist und dass ein der Breite des Schabers (9) entsprechender Abstreifer (17) für den Schaber (9) über ein Gestänge (18) auf einer oberhalb des Rechenrostes (3) und außerhalb des Bewegungsraums des Schabers (9) an der der Abwurfkante (10) zugekehrten Seite im Gehäuse (2) parallel zur Zylinderachse (7) vorgesehenen Schwenkachse (19) gelagert ist und mit dem Schaber (9) in Kontakt gelangt, bevor dieser bei der Drehbewegung die Abwurfkante (10) erreicht.

2. Feststoffabscheider nach Anspruch 1, **dadurch gekennzeichnet, dass** die Schwenkstellung des Abstreifers (17) beim jeweils erstmaligen Kontakt mit dem wenigstens einen Schaber (9) durch einen im Gehäuse (2) vorgesehenen Anschlag (20) definiert ist.

3. Feststoffabscheider nach Anspruch 2, **dadurch gekennzeichnet, dass** ein den Abstreifer (17) gegen den Anschlag (20) drückendes elastisches Element vorgesehen ist.

4. Feststoffabscheider nach einem der Ansprüche 1 bis 3, **dadurch gekennzeichnet, dass** sich die Schwenkachse (19) des Abstreifers (17) in einem Abstand oberhalb der Zylinderachse (7) des Rechenrostes (3) befindet, der dem 1,1- bis 1,3-fachen des Außenradius des Rechenrostes (3) entspricht.

5. Feststoffabscheider nach einem der Ansprüche 1 bis 4, **dadurch gekennzeichnet, dass** die Schwenkachse (19) des Abstreifers (17) gegenüber einer Vertikalen durch die Zylinderachse (7) in Richtung auf die Abwurfkante (10) versetzt ist, wobei eine Verbindung zwischen Zylinderachse (7) und Schwenkachse (19) mit der Vertikalen einen Winkel (α) von 5 bis 45° einschließt.

6. Feststoffabscheider nach einem der Ansprüche1 bis 5, **dadurch gekennzeichnet, dass** der Abstreifer (17) beim jeweils erstmaligen Kontakt mit dem wenigsten einen Schaber (9) gegenüber einer Vertikalen durch die Zylinderachse (7) um einen Winkel (β) von 5 bis 30° in Richtung zur Abwurfkante (10) verschwenkt ist.

7. Feststoffabscheider nach einem der Ansprüche 1 bis 6, **dadurch gekennzeichnet, dass** ein der Abwurfkante (10) gegenüberliegendes Ende (15) des Rechenrostes (3) einen geringeren Höhenabstand zur Zylinderachse (7) des Rechenrostes (3) aufweist als die Abwurfkante (10).

8. Feststoffabscheider nach einem der Ansprüche 1 bis 7, **dadurch gekennzeichnet, dass** die Zähne (12) des wenigstens einen Schabers (9) die Schlitze (4) des Rechenrostes (3) vollständig durchsetzen.

9. Feststoffabscheider nach einem der Ansprüche 1 bis 8, **dadurch gekennzeichnet, dass** die Zähne (12) des wenigstens einen Schabers (9) in den Schlitzen (4) des Rechenrostes (3) ein seitliches Spiel von 25 bis 50 % der Schlitzbreite aufweisen.

10. Feststoffabscheider nach einem der Ansprüche 1 bis 9, **dadurch gekennzeichnet, dass** die Zähne (12) des wenigstens einen Schabers (9) gegenüber einer Radialverbindung zwischen der Zylinderachse (7) des Rechenrostes (3) und dem Außenende des wenigstens einen den Schaber (9) tragenden Arms (8) um einen Winkel (γ) von 0 bis 10° in Drehrichtung angestellt sind.

11. Feststoffabscheider nach einem der Ansprüche 1 bis 10, **dadurch gekennzeichnet, dass** die Zähne (12) des wenigstens einen Schabers (9) auf einer in Radialrichtung verstellbaren Platte (13) ausgebildet sind.

12. Feststoffabscheider nach einem der Ansprüche 1 bis 11, **dadurch gekennzeichnet, dass** der wenigstens eine Schaber (9) auf wenigstens einer der beiden Stirnseiten des Rechenrostes (3) in einer Führung (16) geführt ist.
